# EUROPEAN PATENT APPLICATION

(11) **EP 1 783 932 A1**
(43) Date of publication of application: **09.05.2007**
(21) Application number: 05706645.8
(22) Date of filing: 22.02.2005
(51) Int. Cl.: H04B 10/12

(54) **IMPLEMENT METHOD AND DEVICE OF PROTECTION SWITCHING PROTOCOL USING IP COMMUNICATION MODE**

(30) Priority: 13.08.2004 CN 200410051130
(71) Applicant: ZTE Corporation, 518057 Shenzhen, Guangdong (CN)
(72) Inventor: WANG, Zhenyu, ZTE Plaza, Keji Road South, Shenzhen, Guangdong 518057 (CN)
(74) Representative: Leszczynski, André
(86) International application number: PCT/CN2005/000208
(87) International publication number: WO 2006/015526

(57) **Abstract**

In an apparatus for performing APS under IP communication mode, modulating units are provided for multiplexing/de-multiplexing multiple optical services and supervisory messages into main optical service wavelengths and a supervisory wavelength. An IP exchanger for receiving supervisory wavelength delivers the carried APS signaling in a manner of IP packet towards an APS control system in order to perform the APS in nodes. The present invention overcomes the problem in the related art that signaling direction information cannot be obtained directly and avoid the potential risk caused by increase of quantity of signaling packets.

## Description

### FIELD OF THE INVENTION

The present invention relates to a ring optical transport network applied wave division multiplexing technique, and more particularly, to an apparatus and a method for performing automatic protection switching (APS) under IP communication mode in optical transport network.

### DESCRIPTION OF THE BACKGROUND ART

In optical transport network, APS is an important means of network self-healing hierarchy. Therefore, kinds of means have been tired to improve method for switching till now. The International Telecommunication Union Telecommunication Standardization Sector has already raised a specific recommendation with respect to the function of APS in SDH optical network, that is, G.841 protocol entitled "The type and characteristic of SDH network protection hierarchy structure", in which methods of 1+1 protection and 1:1 protection, and method for performing MS shared protection ring is described in detail. So far a protocol and an international standard for performing APS in WMD optical network are not established. Therefore, the G.841 protocol is adopted at all times by manufacturers in WMD optical network.

In optical network the procedure of APS is completed by an answer of APS signaling between nodes. In SDH network an APS signaling is carried by SDH frame overhead byte. In WDM optical network there are respectively a main optical channel for delivering data on multiple wavelengths and a supervisory channel for delivering control information on the wavelength independent of frequency band of main optical channel. Generally, the APS signaling is carried on the supervisory channel and is delivered between nodes in WDM optical network through a method of pulse code modulation (PCM). According to this kind of method of modulation, the designated frame time slot is provided in order to carry the APS signaling for which K1 and K2 bytes are allocated. Referring to Table 1, the K1 byte contains both the switching pre-emption priorities in bits 1 to 4 as to be an APS request code and the channel number of the channel requesting action in bits 5 to 8 as to be a destination address ID. Meanwhile, referring to Table 2, the K2 byte contains the channel number of the channel that is bridged onto protection in bits 1 to 4 as to be a source address ID, and the mode type in bit 5 (i.e., indicates signaling long or short path); as well, bits 5 to 8 contain various conditions, indication of uni-directional or bi-directional switching. However, the method for switching of the prior art can not deliver another signaling at the same time for multiple protections since the APS signaling can not be extended anymore. Accordingly, the application of the kind of method is limited.

**Table 1: K1 byte Function**

| | |
|---|---|
| I APS Request Code (bits 1 to 4) | Destination Address ID (bits 5 to 8) |

**Table 2: K2 byte Function**

| | | |
|---|---|---|
| Source Address ID (bits 1 to 4) | Signaling Long/Short path (bit 5) | APS Condition (6-8bit) I |

To support multiple protection, a delivery for APS signaling between nodes in optical network according to variation of SDH frame overhead conditions is replaced by that based on the mode of IP packet interruption. The APS function in the optical network cannot be performed once the conventional APS protocol standard (such as G.841, G.842, G.gps of ITU-T) is directly applied in the later mode of APS signaling communication. The signaling direction information required by APS protocol algorithms can not be obtained directly because routing is dynamically established while transmission of the IP packet. Furthermore, quantity of signaling packets may be increased linearly during communication of signaling if multiple protections are initiated, which may be potential risk for communication.

### SUMMARY OF THE INVENTION

An object of the prevent invention is to provide an apparatus for performing the APS so that the extended APS signaling can be delivered in a manner of IP packet after being modulated.

In an aspect of the invention, an apparatus for performing automatic protection switching under IP communication mode comprises at least one modulating unit for multiplexing/de-multiplexing an optical signal; a process module for main optical service wavelengths for receiving and processing main optical wavelengths outputted from the modulating unit, wherein the apparatus comprises an IP exchanger, communicated with the modulating unit for obtaining and outputting an APS signaling packet by processing APS signaling data carried by a supervisory wavelength, and an APS control system, communicated with the IP exchanger.

Here, the APS control system further comprises an APS controller, communicated with the IP exchanger for receiving and processing the APS signaling packet; an APS alarm detection module, communicated with the APS controller for providing an alarm indicator signal required by the APS protocol when faults occur in a network, and an APS switching module, communicated with the APS controller for performing optical on-off action according to APS protocol computing result, wherein, the APS is initiated by an upstream previous node if the APS controller of the current node detects a fault or receives an external APS command.

An APS signaling of the invention modulated by the modulating unit comprises a protection group ID for supporting any protection group triggering mode under a settings of multiple protection group; a signaling direction information, for acting as an auxiliary parameter to determine the direction from which the APS signaling comes; a binding information for protection group, used for identifying the related protection group when multiple protection groups are simultaneously initiated; a filtering information for multicast, used for filtering redundant receiving packets caused by multicast transmission.

Another object of the prevent invention is to provide a method for performing the APS using IP communication mode in order to directly obtain the direction information for signaling and to avoid the potential risk for communication caused by significant quantity of signaling packets when multiple protections are initiated.

In another aspect of the invention, a method for performing automatic protection switching under IP communication mode comprises a) downloading an APS control program to the APS controller of the APS control system; b) configuring protection group for performing APS, downloading and saving information for the protection group as protection configuration information in database of the APS controller; c) delivering the APS signaling between nodes in the network when a node detects that fault occurs in a fiber or receives an APS external command, wherein the APS signaling can be obtained by processes of de-multiplexing optical signal into main optical wavelengths and a supervisory wavelength; making use of the IP exchanger to obtain the APS signaling carried by the supervisory wavelength, and making use of the APS system to perform the APS.

Here, the step of delivering the APS signaling between nodes in the network further comprises identifying the direction from which the APS signaling comes by analyzing data of fields of path trial and signaling direction information in the APS signaling after receiving the APS signaling; identifying the related protection groups in the APS signaling by analyzing data of fields of protection group ID and binding information for protection group; performing the APS in nodes of the related protection groups after receiving an IP packet of the APS signaling transferred t by the IP exchanger, wherein the APS is not initiated until the delivery of the APS is stable and nodes achieve a new state as a result.

Here, the step of identifying the direction from which the APS signaling comes comprises c1) determining the APS signaling comes from "the second side" if the signaling path information of the same is marked as "short" and the signaling direction information is marked as "the first side"; c2) determining the APS signaling comes from "the first side" if the signaling path information of the same is marked as "short" and the signaling direction information is marked as "the second side"; c3) determining the APS signaling comes from "the first side" if the signaling path information of the same is marked as "long" and the signaling direction information is marked as "the first side"; c4) determining the APS signaling comes from "the second side" if the signaling path information of the same is marked as "long" and the signaling direction information is marked as "the second side".

The protection group is logical collection of self property of protection setting, address and port related with a board, network topology structure information, protected service information in a node.

Still another object of the present invention is to provide an annular optical transmission network, each node of which comprises an apparatus for performing APS under IP communication mode, provided with at least one modulating unit for multiplexing/de-multiplexing an optical signal; a process module for main optical service wavelengths for receiving and processing main optical wavelengths outputted from the modulating unit; an IP exchanger, communicated with the modulating unit for obtaining and outputting an APS signaling packet by processing APS signaling data carried by a supervisory wavelength, and an APS control system, communicated with the IP exchanger.

According to an aspect of the present invention, the apparatus of the invention can perform the delivery of APS signaling in a manner of IP packets in an annular optical network. The rapid and reliable communication performance of the system can assure the system to safely operate in the network. Furthermore, the system can be applied broadly as multiple protection groups can be supported in the network by extending the contents of APS signaling.

According to another aspect of the invention, the method of the invention can effectively identify the direction from which the APS signaling comes even in the network for supporting multiple protection groups by the extended APS signaling, and also effectively avoid the potential risk of the communication in the network by the extended APS signaling due to increase of the APS signaling packets.

In addition, the apparatus of the invention has favorable compatibility as it can modulate the APS signaling under the original APS protocol standard to effectively carry out the APS in any kinds of protections, such as 1+1 protection, 1:1 protection, multiplex-section shared-ring protection, channel shared-ring protection and so on.

### BRIEF DESCRIPTION OF THE DRAWINGS

Fig. 1 is a diagram of a node used for performing APS under IP communication mode according to the invention;
Fig. 2 is a sketch chart of two-fiber bi-directional annular optical network, showing that APS signaling is delivered between four nodes;
Fig. 3 is a flow chart of the two-fiber bi-directional annular optical network according to the invention, showing that the APS is performed.

### DETAILED DESCRIPTION OF THE PREFERRED EMBODIMENTS

An exemplary embodiment of the present invention will now be described in detail with reference to the drawings.

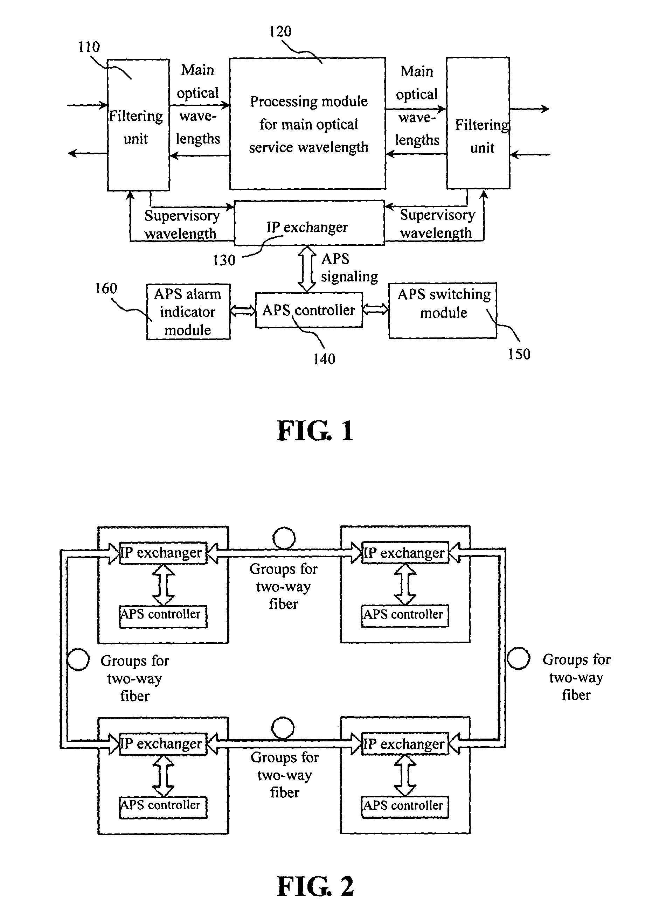

Fig. 1 shows a logic diagram of a node in bi-directional annular optical network. For the node in the bi-directional annular optical network, the same node can receive both optical signals in different direction. Accordingly, two modulating units 110 should be defined in the node in order to process optical signals sent from each transmission direction. After entry into a node, optical signals sent from each transmission direction of the node can be de-multiplexed by each modulating unit 110 into main optical wavelengths and a supervisory wavelength. The main optical wavelengths for carrying service data are inputted to a process module for main optical service wavelengths 120 where the main optical wavelengths are processed. An IP exchanger 130 is provided for receiving the supervisory wavelength on which APS signaling data is carried and can output the APS signaling packet to an APS control system after processing the received supervisory wavelength. The APS control system comprises an APS controller 140, communicated to the IP exchanger 130; an APS alarm detection module 160 for generating an alarm indicator signal required by APS protocol when faults occur in the network, and an APS switching module 150 for performing optical on-off action according to the APS protocol computing result. The APS alarm detection module 160 and the APS switching module 150 respectively communicates to the APS controller 130. Specially, the APS controller 140 can process the received APS signaling packet according to the APS protocol and generate a new APS signaling packet to deliver to other nodes in ring network by IP exchanger 130. Then, the processed wavelengths from each direction are outputted from the module 120 and are sent back to the modulating unit 120 for multiplexing together with the signal for carrying the extended APS signaling packet outputted from the IP exchanger 130. Eventually, the node respectively sends out the multiplexing modulated optical signal towards both directions.

According to the invention, firstly, an APS control program should be downloaded to the APS controller 140, in which APS signaling format is concretely defined. The APS signaling format according to the invention is extended on the basis of that defined in the ITU-T protocol, as shown in Table 3.

**Table 3: APS signaling function according to the invention**

| Field name | Data type (byte) | Description |
|---|---|---|
| Protection group ID | 4 | For identifying different protection groups by numbers 1 to 32 in turns |
| APS request command code | 2 | Corresponding to the K1 byte of APS protocol |
| Destination address ID | 2 | Corresponding to the K1 byte of APS protocol |
| Source address ID | 2 | Corresponding to the K2 byte of APS protocol |
| Signaling path information | 2 | Corresponding to the K2 byte of APS protocol for identifying long/short path of APS signaling |
| APS condition | 2 | Corresponding to the K2 byte of APS protocol |
| Signaling direction information | 2 | In Relation with the direction of source where the protection switching is initiated" and as an auxiliary parameter to determine the direction from which the APS signaling is received |
| Banding information for protection group | 4 | identifying multiple protection groups information when multiple protection groups are initiated simultaneously |
| Filtering information for multicast | 2 | Filtering redundant packets caused by multicast |

By comparing to table 1 and table 2, it is obvious that the extended content for the APS signaling according to the invention contains the fields of protection group ID, signaling direction information, banding information for protection group and multicast filtering information. The protection group ID, however, is used for supporting any one of modes which is initiated by the protection groups under the settings of protection group. Firstly, the filed of protection group is extended into 4 bytes, which means that ID for protection groups can be identified by numbers 1 to 32 in turns according to the invention. When a node receives an external command for the APS at a time, a pre-determined protection group can be initiated individually under the setting of multiple protection groups as the same can be identified by each of nodes by the protection group ID in the signaling packet.

The signaling direction information acts as an auxiliary parameter on which the node depends for determining the direction from which the signaling comes. The signaling direction information when a node receiving or sending a signaling will be marked according to an individual rule. Generally, it is a principle that an APS signaling is delivered towards a downstream node by an upstream node. However, the delivery of APS signaling will be firstly initiated by the downstream node adjacent to a fault. To assist in the description of the delivery of the APS signaling, Suppose that the light from the first direction for transmission is input by the first side of a node and is output by the second side of the node; the light from the second direction for transmission is input by the second side of a node and is output by the first side of the node.

In a node for sending an APS signaling, therefore, the signaling direction information can be marked as "the first side" if the APS command comes from the first side of the node; the signaling direction information can be marked as "the second side" if the APS command comes from the second side of the node. Also, "the fist side" as marked can be set by the value "1", but the value "2" for "the second side".

In nodes for receiving an APS signaling, the direction from which the APS signaling comes is determined as "the second side" if the information of path of the same is marked as "short" and the signaling direction information is marked as "the first side".

Alternately, the direction from which the APS signaling comes is determined as "the first side" if the signaling path information of the same is marked as "short" and the signaling direction information is marked as "the second side".

Alternately, the direction from which the APS signaling comes is determined as "the first side" if the signaling path information of the same is marked as "long" and the signaling direction information is marked as "the first side".

Alternately, the direction from which the APS signaling comes is determined as "the second side" if the signaling path information of the same is marked as "long" and the signaling direction information is marked as "the second side".

Furthermore, multiple protection groups can be initiated at the same time according to the invention. The banding information for protection group is just used for identifying those initiated protection groups. For example, those initiated protection groups can be marked a logical value "1" of the banding information at the corresponding bits, which means the initiated protection groups have been banded. Then, a logical value "0" of the banding information which means "non-banded" may be marked at the corresponding bits of another protection groups.

The multicast filtering information is used for filtering redundant received packets caused by multicast. In a node for initiating an APS signaling, the signaling filtering information should be set into an enabled state if the APS signaling marked as short path is delivered by multicast, but a disabled state for the APS signaling marked as long path. Preferably, the enabled state and the disable state as marked can be set by the logic value "1" and "0", respectively.

Accordingly, the nodes for receiving the APS signaling can filter redundant signaling by multicast. Firstly, when a node identifies that the value of filtering information of the received APS signaling is set into the disabled state, the node determines that the APS signaling should be necessary to receive and does not fiber the signaling.

Next, when a node identifies that the value of filtering information of the received APS signaling is set into the enabled state and that the address ID for destination carried in the signaling is equal to that of the node per se, the node determines that the APS signaling should be necessary to receive.

Finally, when a node identifies that the value of filtering information of the received APS signaling is set into the enabled state and that the address ID for destination carried in the signaling is not equal to that of the node per se, the node determines that the APS signaling should be fibered.

Obviously, the APS signaling of the invention can carry more information by extending the corresponding bits in K1 and K2 bytes of the conventional signaling into variable bytes.

Secondly, the APS protection group is configured by an administrator. The protection group information is downloaded as protection configuration information and stored in database of the APS controller. The protection group is a logistic collection of self-property of protection setting, address and port of a board related with APS system, network topology structure, protected service information and so on in a node.

Generally, each node in the network is normally in an idle state according to ITU-T protocol. When a fault occurs in a fiber or is initiated by an APS external command, the APS signaling will be delivered between nodes according to the APS protocol. After receiving an APS signaling packet, a node according to the invention can determine the direction from which the APS signaling comes by analyzing the information in the field of long/short path and by computing the field of direction information, and can acquire the protection group corresponding to the signaling by analyzing the protection group ID and the banding information for protection group. Then, the signaling as to be processed in an IP packet by protection switching protocol algorithms is sent to the APS switching module 150 in order to perform the APS. Each of nodes will achieve a new state after the delivery of the APS signaling between the nodes is stable. Meanwhile, the APS is initiated in the relating node after the nodes are in new state.

Now referring to Fig. 2, there are four nodes in the two-fiber bi-directional ring WDM optical network. As illustrated, the delivery of APS signaling is performed by the IP controller in each node through the IP exchanger in a manner of IP communication. The fiber connected between nodes, however, will act as a carrier for IP communication.

The APS control system is available after the protection switching protocol processing program is downloaded completely and the protection group information is configured successfully in the APS controller of the ring optical network.

The state of the APS controller in each node is idle, and no APS signaling is delivered between nodes if no fault occurs in the network and no APS external command is issued by an administrator according to the protocol.

When a node suddenly detects a fault in the fiber or receives an external APS command, the node can initiate an APS process by the delivery of the APS signaling. The APS signaling of the invention can be compatible with that of the conventional APS protocol standard, therefore, contents defined by the conventional protocol standard as well as the corresponding processing algorithms in signaling packet may be remained during the delivery of the APS signaling of the invention.

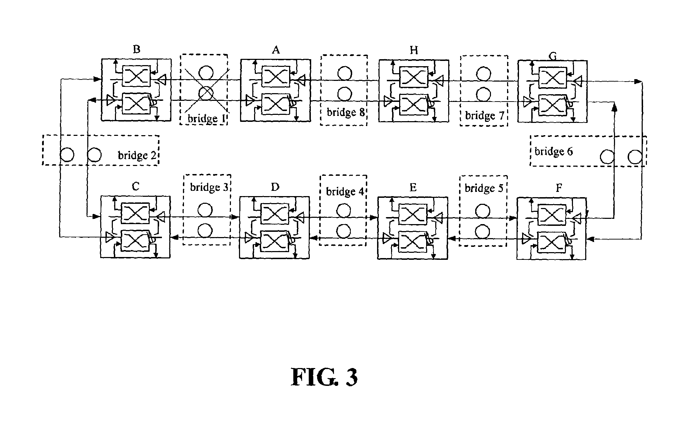

Hereinafter, the extended contents according to the invention will be described in detail by combination with the preferred embodiment as shown in Fig. 3.

Referring to Fig. 3, the optical network are configured by eight nodes A-H among which two annular paths of light transmitted by fibers is illustrated, that is, an external ring and an internal ring of which transmission path is shown by a series of arrows as to be disposed in clockwise direction (such as the first direction) and in anticlockwise direction (such as the second direction) respectively. The section between every two nodes is so-called bridge. For example, there are bridges 1-8 as respectively shown between the nodes A and B, B and C, C and D, D and E, E and F, F and G, G and H, H and A. For example, when the bridge 1 of the external ring breaks off, it is possible for the node A to firstly detect the fault and then initiate the APS signaling. If so, the node A can further determine that the fault resides at its first side and then immediately sends an APS signaling marked as short path and an APS signaling marked as long path respectively towards the node B at an opposite side of the bridge 1. The APS signaling marked as long path is sent from the node A to the node B through the middle nodes H, G, F, E, D and C in turn by multicast along the external ring, while the APS signaling marked as short path is only sent to the node B by single cast (multicast also available but setting multicast filtering identifier in the signaling regarding communication efficiency) along the internal ring.

It is easy for the node B and another nodes to determine the direction from which the signaling sent by the node A comes since the direction information has been extended into the signaling packet according to the method of the invention.

According to the rule of the invention, both APS signaling marked as long trial and short trial should be set into "first side". When receiving the APS signaling marked as short trial sent by the node A, the node B can determine that the APS signaling comes from it's "the second side". Meanwhile, when another middle nodes H, G, F, E, D and C receiving the APS signaling marked as long trial sent by the node A, the nodes can determine that the APS signaling initiated in turn respectively comes from "the first side" of each node.

Furthermore, the filtering information of the APS signaling marked as short trial which is sent by the node A should be set into the enabled state. Then, the node B can receive the APS signaling as the address ID for destination in the signaling is equal to that of the node B, while another middle nodes can fiber the signaling in turns as the address ID for destination in the signaling is not equal to that of each node.

As for the optical network having multiple protection groups, the multiple protection groups may be simultaneously initiated by an APS trigger source. With increase in protection groups, a quantity of signaling packets will be increased linearly, which will result in potential communication risk for efficiency of delivering signaling and reliability for delivering signaling packet may be reduced. Thus, an application for the banding information for protection groups of the invention can be used for avoiding the risk to be occurred.

Although a protection group is merely shown in Fig. 3, it should be understood for the person skilled in the art that the embodiment is illustrated and multiple protection groups can be similarly applied in the embodiment. When multiple protection groups are simultaneously initiated by the fault occurred in the bridge 1, the node A may merge those protection groups that have the same network node topology and form a uniform packet for combining signaling of multiple groups to send out rather than delver signaling for multiple protection groups one by one. Subsequently, the field of protection group ID for the signaling is firstly set into a particular value different from any protection group ID, such as 0xFFFFFFFF, then the field of banding information for protection group is set by bit in order to indicate the conditions of multiple protection groups to be banded from bit 1 to bit 32. For example, the logic value "1" is used for indicating that the protection group corresponding to the bit is banded in the signaling, but "0" for indicating the protection group corresponding to the bit is not banded in the signaling.

Then, when each of the nodes is receiving the signaling, the node firstly confirms whether the signaling comprises the information which multiple protection groups are banded by the value of the field of protection group ID in the signaling packet. If so, the node resolves the uniform packet for signaling into multiple signaling packets corresponding to the banding information for protection group according to value of the field of banding information for protection group so as to be processed respectively based on the protocol rule. However, the multiple signaling packets will be restored into the original uniform packets again according to the invention before sending out towards the downstream node. By this way, a quantity of signaling packets can be suppressed efficiently when multiple protection groups are triggered simultaneously to guarantee efficiency and reliability for performing the APS in the network.

Apparently, the present invention also has other various embodiments. It will be apparent to those skilled in the art that various modifications and variations can be made, thus it is intended that the present invention cover the modifications and variations of this invention provided they come within the scope of the appended claims and their equivalents.

### Industry Application

The apparatus of the invention can perform the delivery of APS signaling in a manner of IP packets in an annular optical network. The rapid and reliable communication performance of the system can assure the system to safely operate in the network. Furthermore, the system can be applied broadly as multiple protection groups can be supported in the network by extending the contents of APS signaling. The method of the invention can effectively identify the direction from which the APS signaling comes even in the network for supporting multiple protection groups by the extended APS signaling, and also effectively avoid the potential risk of the communication in the network by the extended APS signaling due to increase of the APS signaling packets. The present invention may be applied to not only protection switching protocol in an annular optical network using WDM, but also other fields with the same problems.

## Claims

1. An apparatus for performing automatic protection switching under IP communication mode, **characterized in that** the apparatus comprises
at least one modulating unit for multiplexing/de-multiplexing an optical signal;
a process module for main optical service wavelengths for receiving and processing main optical wavelengths outputted from the modulating unit, wherein the apparatus comprises
an IP exchanger, communicated with the modulating unit for obtaining and outputting an APS signaling packet by processing APS signaling data carried by a supervisory wavelength, and
an APS control system, communicated with the IP exchanger.

2. The apparatus as claimed in claim 1, **characterized in that** the APS control system further comprises
an APS controller, communicated with the IP exchanger for receiving and processing the APS signaling packet;
an APS alarm detection module, communicated with the APS controller for providing an alarm indicator signal required by the APS protocol when faults occur in a network, and
an APS switching module, communicated with the APS controller for performing optical on-off action according to APS protocol computing result, wherein, the APS is initiated by an upstream previous node if the APS controller of the current node detects a fault or receives an external APS command.

3. The apparatus as claimed in claim 2, **characterized in that** an APS signaling modulated by the modulating unit comprises
a protection group ID for supporting any protection group triggering mode under a settings of multiple protection group;
a signaling direction information, for acting as an auxiliary parameter to determine the direction from which the APS signaling comes;
a binding information for protection group, used for identifying the related protection group when multiple protection groups are simultaneously initiated;
a filtering information for multicast, used for filtering redundant receiving packets caused by multicast transmission.

4. A method for performing automatic protection switching under IP communication mode, **characterized in that** the method comprises
a) downloading an APS control program to the APS controller of the APS control system;
b) configuring protection group for performing APS, downloading and saving information for the protection group as protection configuration information in database of the APS controller;
c) delivering the APS signaling between nodes in the network when a node detects that fault occurs in a fiber or receives an APS external command, wherein the APS signaling can be obtained by processes of de-multiplexing multiple optical services into main optical wavelengths and a supervisory wavelength; making use of the IP exchanger to obtain the APS signaling carried by the supervisory wavelength, and making use of the APS system to perform the APS.

5. The method as claimed in claim 4, **characterized in that** the step of delivering the APS signaling between nodes in the network comprises
identifying the direction from which the APS signaling comes by analyzing data of fields of path trial and signaling direction information in the APS signaling after receiving the APS signaling;
identifying the related protection groups in the APS signaling by analyzing data of fields of protection group ID and binding information for protection group;
performing the APS in nodes of the related protection groups after receiving an IP packet of the APS signaling transferred t by the IP exchanger, wherein the APS is not initiated until the delivery of the APS is stable and nodes achieve a new state as a result.

6. The method as claimed in claim 5, **characterized in that** the step of identifying the direction from which the APS signaling comes comprises
c1) determining the APS signaling comes from "the second side" if the signaling path information of the same is marked as "short" and the signaling direction information is marked as "the first side";
c2) determining the APS signaling comes from "the first side" if the signaling path information of the same is marked as "short" and the signaling direction information is marked as "the second side";
c3) determining the APS signaling comes from "the first side" if the signaling path information of the same is marked as "long" and the signaling direction information is marked as "the first side";
c4) determining the APS signaling comes from "the second side" if the signaling path information of the same is marked as "long" and the signaling direction information is marked as "the second side".

7. The method as claimed in claim 7, **characterized in that** the protection group is logical collection of self property of protection setting, address and port of a board related with APS system, network topology structure information, protected service information in a node.

8. An annular optical transmission network, **characterized in that** each node in the network comprises an apparatus for performing APS under IP communication mode, provided with
at least one modulating unit for multiplexing/de-multiplexing an optical signal;
a process module for main optical service wavelengths for receiving and processing main optical wavelengths outputted from the modulating unit;
an IP exchanger, communicated with the modulating unit for obtaining and outputting an APS signaling packet by processing APS signaling data carried by a supervisory wavelength, and
an APS control system, communicated with the IP exchanger.
